# EUROPEAN PATENT APPLICATION

(11) **EP 3 422 052 A1**
(43) Date of publication of application: **02.01.2019**
(21) Application number: 18179532.9
(22) Date of filing: 25.06.2018
(51) Int. Cl.: G01V 3/30, E21B 47/08

(54) **APPARATUS AND METHOD OF AZIMUTHAL MAGNETIC SENSOR ARRAY FOR DOWN-HOLE APPLICATIONS**

(30) Priority: 28.06.2017 US 201715636369
(71) Applicant: Gowell International, LLC, Houston, Texas 77041 (US)
(72) Inventor: YU, Yanxiang, Houston, TX 77098 (US); ZHAO, Jinsong, Houston, TX 77007 (US)
(74) Representative: Wynne-Jones IP Limited

(57) **Abstract**

A system and method for inspecting a tube. An inspection system (2) may comprise a telemetry module (8) which may comprise an accelerometer. The inspection system may further comprise a centralizing module (6) which may comprise at least three arms (18). The inspection system may further comprise an inspection device (4) which may comprises a memory module (22), a differential amplifier, and a sensor array (24), wherein the sensor array comprises a transmitter, core, and plurality of receivers. The inspection system may also comprise a service device. A method for inspecting a tube may comprise inserting an inspection device into a tube, wherein the inspection device may comprise a sensor array and a memory unit. The method may further comprise energizing the sensor array, wherein an electro-magnetic field may be emitted from the sensor array. Additionally, the method may comprise inducing a magnetic field within the tubing, and measuring voltage with a receiver of the sensor array.

## Description

### BACKGROUND OF THE INVENTION

### Field of the Invention

This invention relates to a field for imaging wall thickness variations, changes in tubing, imaging casing deformation or casing eccentricity through a tube, and imaging multiple tubes using non-destructive means in cased-hole downhole logging applications. The changes and variations of tubing walls may be caused by internal and/or external patches, clamps, corrosions, erosions, and/or any combination thereof.

### Background of the Invention

Tubing may be used in many different applications and may transport many types of fluids. Many times, tubes may be placed underground and/or positioned in an inaccessible area, making inspection of changes within tubing difficult. It may be beneficial to measure the thickness variations within a tube while the tube is in use. Previous methods for inspecting tubes have come in the form of non-destructive inspection tools such as electromagnetic devices that may measure magnetic flux-leakage within tubing, which may not be able to detect changes in multi-pipe situations. Additionally, previous methods may not be able to perform multi-pipe azimuthal imaging in three hundred and sixty degrees. Electromagnetic devices may be well suited for tube inspection because they may operate and be insensitive to any fluid within the tube.

Previous devices and methods that may measure flux-leakage may only be useful for the detection of localized damage in ferromagnetic pipes. The measurement of flux-leakage may be hindered by the type of tube, thinning of tubing, requirements of a strong magnetic field, strong flux coupling, and a requirement for the device to be in close proximity to the tube walls.

Additionally, casing deformation and eccentricity evaluation play a critical role in well integrity evaluation, production well plugging, and abandonment. In examples, the detection of casing through tubing may be hindered as electromagnetic signals may be blocked by the tubing. Thus, there is a need for an electromagnetic tool which may have the capability of producing an electromagnetic field that may penetrate the tubing.

### BRIEF SUMMARY OF SOME OF THE PREFERRED EMBODIMENTS

These and other needs in the art may be addressed in embodiments by a system and method for inspecting a tube.

A system and method for inspecting a tube. An inspection system may comprise a telemetry module which may comprise an accelerometer. The inspection system may further comprise a centralizing module which may comprise at least three arms. The inspection system may further comprise an inspection device which may comprises a memory module, a differential amplifier, and a sensor array, wherein the sensor array comprises a transmitter, a core, and a plurality of receivers. The inspection system may also comprise a service device.

In an embodiment, the core may comprise a silicone and iron mixture, a cobalt and iron mixture, a soft magnetic iron metal, and/or any combination thereof.

In an embodiment, the telemetry module, the centralizing module, and the inspection device are attached to a tether. The tether may comprise a communication cable, and in an embodiment, the sensor array sends data through the communication cable in real time.

In an embodiment, the memory module comprises a flash drive.

A method for inspecting a tube may comprise inserting an inspection device into a tube, wherein the inspection device may comprise a sensor array and a memory unit. The method may further comprise energizing the sensor array, wherein an electro-magnetic field may be emitted from the sensor array. Additionally, the method may comprise inducing a magnetic field within the tubing, and measuring voltage with a receiver of the sensor array.

The foregoing has outlined rather broadly the features and technical advantages of the present invention in order that the detailed description of the invention that follows may be better understood. Additional features and advantages of the invention will be described hereinafter that form the subject of the claims of the invention. It should be appreciated by those skilled in the art that the conception and the specific embodiments disclosed may be readily utilized as a basis for modifying or designing other embodiments for carrying out the same purposes of the present invention. It should also be realized by those skilled in the art that such equivalent embodiments do not depart from the spirit and scope of the invention as set forth in the appended claims.

### BRIEF DESCRIPTION OF THE DRAWINGS

For a detailed description of the preferred embodiments of the invention, reference will now be made to the accompanying drawings in which:
Figure 1 illustrates an embodiment of an inspection system disposed downhole;
Figure 2 illustrates an embodiment of a sensor array;
Figure 3 illustrates an embodiment of a magnetic field produced by a sensor array;
Figure 4a illustrates an embodiment of a magnetic field distribution of a centered casing;
Figure 4b illustrates an embodiment of a magnetic distribution of a non-centered casing;
Figure 4c illustrates an embodiment of a magnetic distribution of a deformation casing;
Figure 5a illustrates an embodiment of the sensor array in a centered casing;
Figure 5b illustrates an embodiment of the sensor array in a deformation casing;
Figure 5c illustrates an embodiment of the sensor array in a non-centered casing;
Figure 5d illustrates a graph illustrating the detection of the sensor array; and
Figure 6 is a graph illustrating a space harmonic analysis;

### DETAILED DESCRIPTION OF THE PREFERRED EMBODIMENTS

The present disclosure relates to embodiments of a device and method for inspecting and detecting characteristics of tubing and devices attached to tubing. More particularly, embodiments of a device and method are disclosed for inspecting a number of tube walls surrounding an innermost tube wall. In embodiments, an inspection device may induce an in surrounding tube walls, through transmitted magnetic flux, by producing an electro-magnetic field, the magnetic flux may saturate casing and/or a plurality of tubing, which may create an environment of electromagnetic related measurements.

In embodiments, an inspection device may be a differential magnetic sensor array. The inspection device may boost the electro-magnetic field outside tubing by creating an orthogonal, or substantially orthogonal, magnetic field within the tubing, which may provide a higher accuracy in outside tube thickness measurement. In embodiments, the electro-magnetic field may be a focused perpendicular to the incident of inspected tubing. The inspection device may be used to measure tubing thickness, aberrations in tubing, and/or devices attached to the tubing.

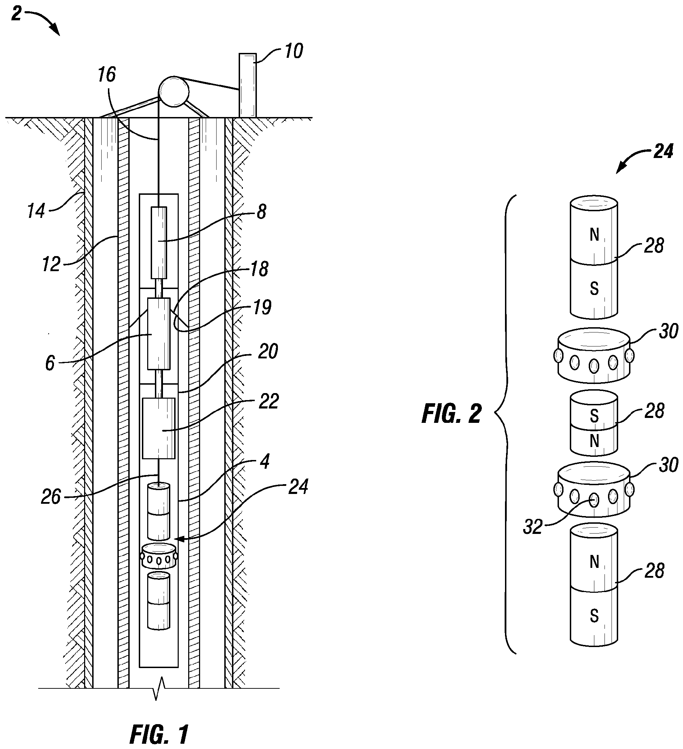

Figure 1 illustrates an inspection system 2 comprising an inspection device 4, a centralizing module 6, a telemetry module 8, and a service device 10. In embodiments, inspection device 4 may be inserted into tubing 12, wherein tubing 12 may be contained within casing 14. In further embodiments, not illustrated, there may be a plurality of tubing 12, wherein an inner tube may be contained by several additional tubes. In embodiments, as shown, inspection device 4 may be disposed below centralizing module 6 and telemetry module 8. In other embodiments, not illustrated, inspection device 4 may be disposed above and/or between centralizing module 6 and telemetry module 8. In embodiments, inspection device 4, centralizing module 6, and telemetry module 8 may be connected to tether 16. Tether 16 may be any suitable cable that may support inspection device 4, centralizing module 6, and telemetry module 8. A suitable cable may be steel wire, steel chain, braided wire, metal conduit, plastic conduit, ceramic conduit, and/or the like. A communication line, not illustrated, may be disposed within tether 16 and connect inspection device 4, centralizing module 6, and telemetry module 8 with service device 10. Without limitation, inspection system 2 may allow operators on the surface to review recorded data in real time from inspection device 4, centralizing module 6, and telemetry module 8.

As illustrated in Figure 1, service device 10 may comprise a mobile platform (i.e. a truck) or stationary platform (i.e. a rig), which may be used to lower and raise inspection system 2. In embodiments, service device 10 may be attached to inspection system 2 by tether 16. Service device 10 may comprise any suitable equipment which may lower and/or raise inspection system 2 at a set or variable speed, which may be chosen by an operator. The movement of inspection system 2 may be monitored and recorded by telemetry module 8.

Telemetry module 8, as illustrated in Figure 1, may comprise any devices and processes for making, collecting, and/or transmitting measurements. For instance, telemetry module 8 may comprise an accelerator, gyro, and the like. In embodiments, telemetry module 8 may operate to indicate where inspection system 2 may be disposed within tubing 12 and the orientation of sensor array 24, discussed below. Telemetry module 8 may be disposed at any location above, below, and/or between centralizing module 6 and inspection device 4. In embodiments, telemetry module 8 may send information through the communication line in tether 16 to a remote location such as a receiver or an operator in real time, which may allow an operator to know where inspection system 2 may be located within tubing 12. In embodiments, telemetry module 8 may be centered laterally in tubing 12.

As illustrated in Figure 1, centralizing module 6 may be used to position inspection device 4 and/or telemetry module 8 inside tubing 12. In embodiments, centralizing module 6 laterally positions inspection device 4 and/or telemetry module 8 at about a center of tubing 12. Centralizing module 6 may be disposed at any location above and/or below telemetry module 8 and/or inspection device 4. In embodiments, centralizing module 6 may be disposed above inspection device 4 and below telemetry module 8. Centralizing module 6 may comprise arms 18. In embodiments, there may be a plurality of arms 18 that may be disposed at any location along the exterior of centralizing module 6. Specifically, arms 18 may be disposed on the exterior of centralizing module 8. In an embodiment, as shown, at least one arm 18 may be disposed on opposing lateral sides of centralizing module 6. Additionally, there may be at least three arms 18 disposed on the outside of centralizing module 6. Arms 18 may be moveable at about the connection with centralizing module 6, which may allow the body of arm 18 to be move closer and farther away from centralizing module 6. Arms 18 may comprise any suitable material. Suitable material may be but is not limited to, stainless steel, titanium, metal, plastic, rubber, neoprene, and/or any combination thereof. In embodiments, the addition of springs 19 may further make up and/or be incorporated into centralizing module 6. Springs 19 may assist arms 18 in moving centralizing module 6 away from tubing 12, and thus inspection device 4 and telemetry module 8, to about the center of tubing 12. Without limitation, centering inspection device 2 may produce more reliable and accurate voltage readings of tubing 12.

Inspection device 4, as illustrated in Figure 1, may be located below centralizing module 6 and/or telemetry module 8. Inspection device 4 may be designed to detect defects and measure wall thickness in tubing 12 and surrounding tubing. In embodiments, inspection device 4 may be able to detect, locate transverse and longitudinal defects (both internal and external), determine the deviation of the wall thickness from its nominal value thorough the interpretation of voltage data. Tubing 12 may be made of any suitable material for use in a wellbore. Suitable material may be, but is not limited to, metal, plastic, and/or any combination thereof. Additionally, any type of fluid may be contained within tubing 12 such as, without limitation, water, hydrocarbons, and the like. In embodiments, there may be additional tubing which may encompass tubing 12. Inspection device 4 may comprise a housing 20, a memory module 22, and a sensory array 24. Housing 20 may be any suitable length in which to protect and house the components of inspection device 4. In embodiments, housing 20 may be made of any suitable material to resist corrosion and/or deterioration from a fluid. Suitable material may be, but is not limited to, titanium, stainless steel, plastic, and/or any combination thereof. Housing 20 may be any suitable length in which to properly house the components of inspection device 4. A suitable length may be about one foot to about ten feet, about four feet to about eight feet, about five feet to about eight feet, or about three feet to about six feet. Additionally, housing 20 may have any suitable width. A suitable diameter may be about one foot to about three feet, about one inch to about three inches, about three inches to about six inches, about four inches to about eight inches, about six inches to about one foot, or about six inches to about two feet. Housing 20 may protect memory module 22 and sensory array 24 from the surrounding downhole environment within tubing 12.

As illustrated in Figure 1, memory module 22 may be disposed within inspection device 4. In embodiments, memory module 22 may store all received recorded and measured data and may transmit the data in real time through a communication line in tether 16 to a remote location such as an operator on the surface. Memory module 22 may comprise flash chips (i.e., a flash drive) and/or ram chips which may be used to store data and/or buffer data communication. Additionally, memory module 22 may further comprise a transmitter, processing unit and/or a microcontroller. In embodiments, memory module 22 may be removed from inspection device 4 for further processing. Memory module 22 may be disposed within any suitable location of housing 20. Such as, about the top, about the bottom, or about the center of housing 20. In embodiments, memory module 22 may be in communication with sensor array 24 by any suitable means such as by a connection to sensor array 24 by a communication line 26. Memory module 22 may record voltage recordings transmitted from sensor array 24.

Figure 2 illustrates an embodiment of sensor array 24. Sensor array 24 may comprise of a transmitter 28 (i.e. exciting coil, rare earth magnet), core 30, and/or receiver 32. As illustrated in Figure 2, transmitter 28 may be used to produce magnetic flux, which may be used to create magnetic fields within tubing 12 and/or multiple layers of tubing, discussed below. Transmitter 28 may comprise a rare earth magnet, coil, and/or any combination thereof. Without limitation, transmitter 28 may be energized in anti-direction/180 degree phase difference. In examples, there may be a plurality of transmitters 28 disposed in sensor array 24. The plurality of transmitters 28 may produce sensor array 24, which may be factually extended or self-repeating. Additionally, transmitters 28 may be different sizes and/or magnitude for focusing effects. Transmitter 28 may operate to generate a focused static magnetic field in a downhole environment. Without limitation, the magnetic flux transmitted may be in the low frequency of about five hertz to a high frequency may be about one hundred Hertz. For example, the magnetic flux may range from about five hertz to about ten hertz, about ten hertz to about twenty hertz, about twenty five hertz to about fifty hertz, about thirty hertz to about sixty hertz, about fifty hertz to about seventy five hertz, or about seventy five hertz to about one hundred hertz. This may generate a magnetic field in a plurality of tubing 12. The magnetic flux may saturate casing 14 and/or a plurality of tubing 12, which may create an environment of electromagnetic related measurements. Without limitation, electromagnetic related measurements may be a pulsed eddy current test, magnetic flux test, free pipe stuck pint test, and/or the like. A static magnetic field may not be affected by the movement of inspection device 4, which may allow for electromagnetic related measurements to be performed continuously.

Disposed between transmitters 28 may be core 30. In embodiments, core 30 may comprise any suitable material with a conductivity of zero or about zero. Suitable material may be, but is not limited to, a silicone and iron mixture, a cobalt and iron mixture, a soft magnetic iron metal, and/or any combination thereof. Core 30 may be any suitable length, such as about three inches to about six inches, about one foot to about three foot, about six inches to about twelve inches, or about six inches to about two feet. Additionally, core 30 may have a width of about half an inch to about three inches, about one inch to about four inches, about two inches to about six inches, or about six inches to about twelve inches. Core 30 may function to focus magnetic flux from transmitter 28 into tubing 12 and/or a plurality of tubing.

Further illustrated in Figure 2, receivers 32 may be disposed on core 30. Receivers 32, without limitation, may be linear hall sensors, monolithic hall sensors, magnetometers, and/or the like. In examples, receivers 32 may be disposed azimuthally around core 30 and/or disposed at different locations within inspection device 4.

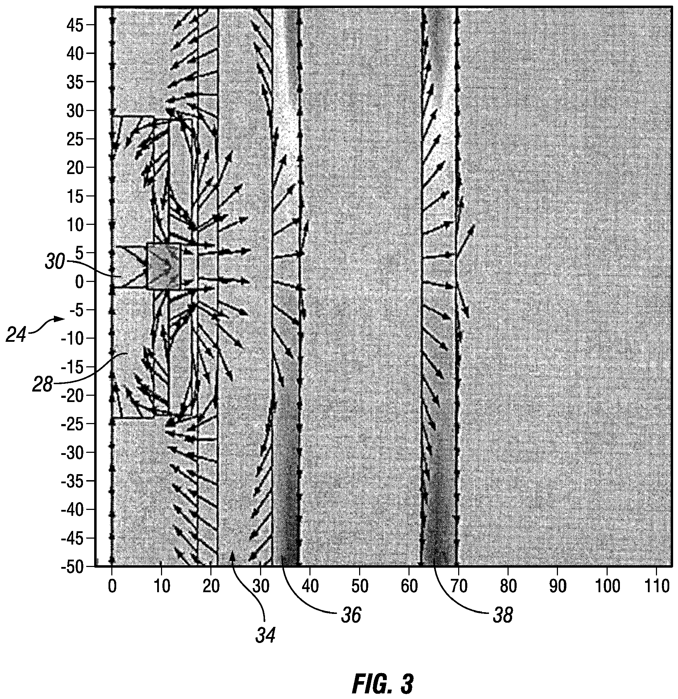

As illustrated in Figure 3, electro-magnetic field 34 (illustrated by arrows) may be produced and emitted from sensor array 24. Sensor array 24 may comprise transmitter 28, core 30, and receiver 32 (as illustrated in Figure2). When turned on, transmitter 28 may produce an electromagnetic field 34, which may be directed by core 30 and induce eddy current in tubing 12. In embodiments, electro-magnetic field 34 may be sufficiently strong and of sufficient size large enough to induce an eddy current in a first tube 36 and a second tube 38. It should be noted that electro-magnetic field 34 may induce an eddy current in additional outside tubing not illustrated. Electro-magnetic field 34 may be directed by core 30. Different configurations of core 30 may direct electro-magnetic field 34 differently, which may be selected by the operator. In embodiments, transmitter 28 may continuously broadcast a static electromagnetic field for any given length of time.

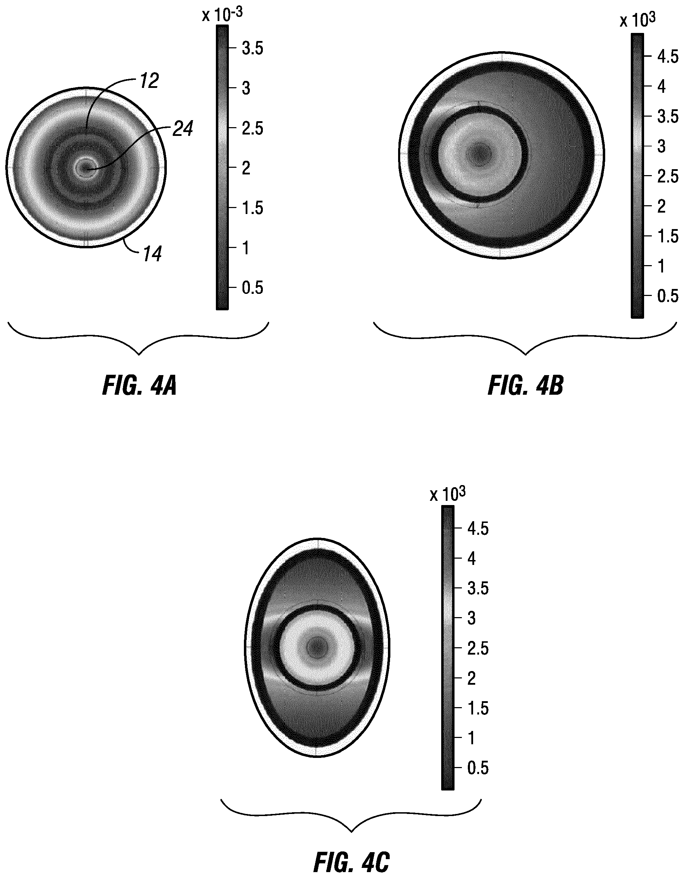

Figures 4a-4c illustrate the magnetic field distribution in tubing 12 and casing 14. Magnetic field intensity may be measured by receiver 32 (referring to Figure 2) through voltage to determine the arrangement of tubing 12 in relation to casing 14. In Figure 4a, sensor array 24 may be disposed in tubing 12. Tubing 12 may be disposed and centered in casing 14. As illustrated in Figure 4a, the magnetic field broadcasted by sensor array 24 may be evenly distributed around tubing 12. In Figure 4b, tubing 12 may be disposed closer to one side of casing 14 than the other. As illustrated in Figure 4b, the magnetic field may be stronger in the area in which tubing 12 is disposed closer to casing 14. In Figure 4c, casing 14 may be compressed by the downhole environment, in which sections of casing 14 may be disposed closer to tubing 12 than other sections of casing 14. As illustrated in Figure 4c, the magnetic field may be stronger in sections in which tubing 12 may be disposed closer to casing 14.

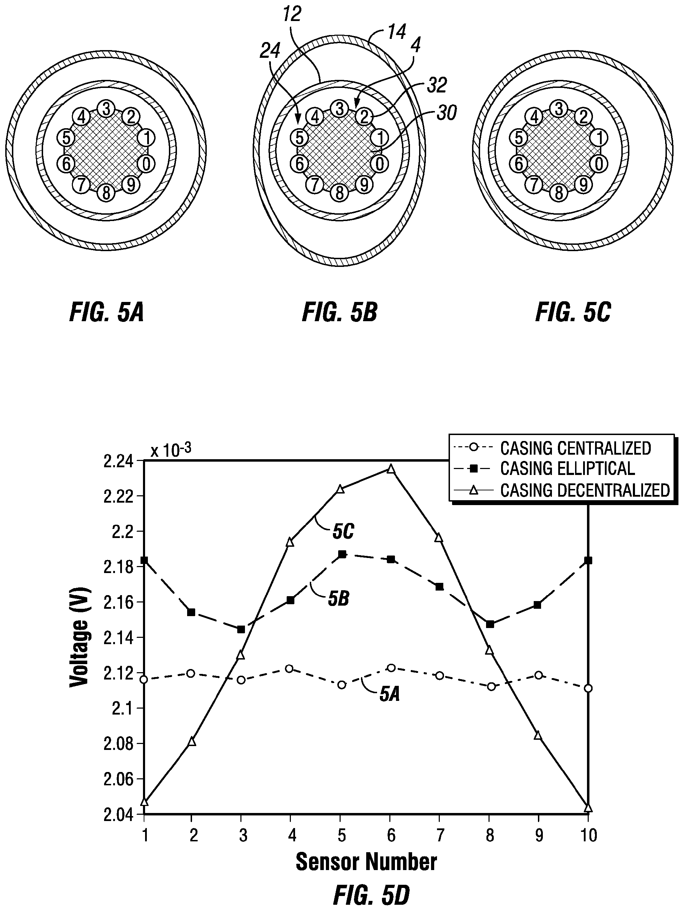

Figure 5a illustrates tubing 12, which may be disposed and centered in casing 14. Transmitter 28 (not illustrated), disposed in sensor array 24 may transmit an electro-magnetic field, which may be used to identify the structural integrity of tubing 12 and/or casing 14. In embodiments, core 30 (not illustrated), disposed in sensor array 24, may transmit the electromagnetic field three hundred and sixty degrees, which may induce an eddy current in tubing 12 and casing 14. Sensor array 24 may comprise receivers 32, which may be identified as Markers 0-9. In Figure 5a, Markers 0-9 may sense about the same voltage. Recorded voltage from Figure 5a from Markers 0-9 may be illustrated in Figure 5d. Measured voltages at each Marker may be displayed on the graph. Displaying nearly the same voltage reading by each Marker 0-9 may indicate that tubing 12 may be centered in casing 14. This process may be repeated to determine the structural shape of tubing 12 and casing 14, as well as how tubing 12 may be disposed in casing 14.

For example, as illustrated in Figures 5b, inspection device 4 may traverse through a casing 14, which may be deformed. Sensor array 24 may transmit an electro-magnetic field, which may be used to identify a deformed casing 14. In embodiments, core 30 may transmit the electromagnetic field three hundred and sixty degrees, which may induce an eddy current in tubing 12 and casing 14. Receivers 32 may sense and record the voltage produced by the transmission of the electro-magnetic field. In embodiments, receivers 32, identified as Markers 2-4 and 7-9, may sense a voltage less than the voltage sensed by Markers 0, 1, 5, and 6. The small amount of voltage sensed by Markers 2-4 and 7-9 may indicate that the wall of casing 14 may be farther away than expected at that location. Markers 0, 1, 5, and 6 may sense a voltage that may be higher than voltages sensed by Markers 2-4 and 7-9. A large amount of voltage sensed by Markers 0, 1, 5, and 6 may indicate that the wall of casing 14 may be closer than expected at those locations. The graph shown in Figure 5d may illustrate the recorded voltages at Markers 0-9. The graph may indicate that casing 14 is deformed from the pressure exerted upon it by an underground formation. In embodiments, sensor array 24 may further be able to sense a non-centered tubing 12 in casing 14.

Figure 5c illustrates when tubing 12 may not be centered in casing 14. Sensor array 24 may transmit an electro-magnetic field, which may help to identify when tubing 12 may not be centered in casing 14. In embodiments, core 30 may transmit the electro-magnetic field three hundred and sixty degrees, which may induce an eddy current in tubing 12 and casing 14. Receivers 32 may sense and record the voltage produced by the transmission of the electromagnetic field. In embodiments, receivers 32, specifically identified as Markers 4-7, may sense a voltage higher than the voltage sensed by Markers 0-3, 8, and 9. The large amount of voltage sensed by Markers 4-7 may indicate that the casing 14 wall may be closer to tubing 12 away than expected at that location. Markers 0-3, 8, and 9 may sense a voltage that may be lower than the voltage sensed by Markers 4-7 at that location. A smaller amount of voltage recorded at Markers 0-3, 8, and 9 may indicate that the casing wall may be farther away than expected. The graph shown in Figure 5d may indicated that tubing 12 may not be centered in casing 14.

In embodiments, not illustrated, sensor array 24 may be able to sense segments of a casing 14 wall that may be thinner than other segments of the wall of casing 14. Sensor array 24 may transmit an electro-magnetic field, which may help to identify thinner segments of the casing 14 wall as well as perforations, deformation, and eccentricity in the wall of casing 14. Additionally, sensor array 24 may be used to detect metal clips (not illustrated). Metal clips may be used to hold a production monitoring system, not illustrated, in place. A production monitoring system may be a string of cables, specifically fiber optic cables and/or control lines, which may be used to sense and/or perform activity within tubing 12. The production monitoring system may wrap around tubing 12 during installation. For instance, oil companies may want to know the location of the production monitoring system to keep from harming the system when activities such as perforation of tube 12 and casing 14 may be performed. Locating metal clips 40 may indicate to an operator where the production monitoring system may be disposed. Sensor array 24 may transmit an electro-magnetic field which may help to identify metal clips disposed outside tubing 12.

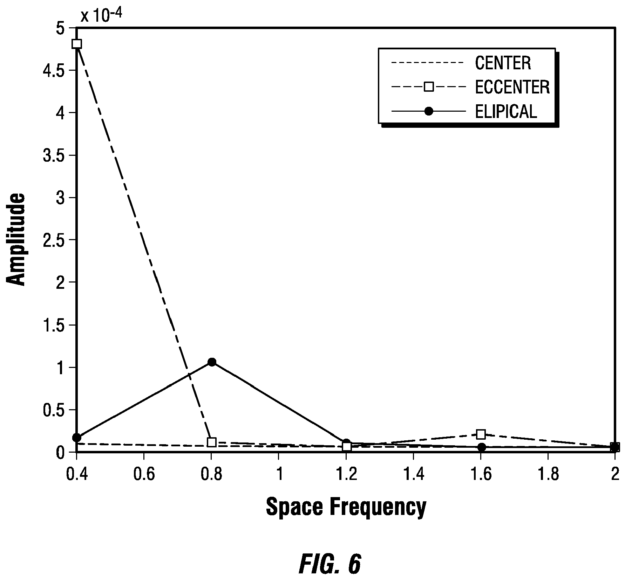

Post processing methods may increase the efficiency and accuracy of evaluation tubing 12 and/or casing 14 (Referring to Figure 1). For example, a method comprising channel differentiating may differentiate adjacent azimuthal sensors and/or differential between pairs of dipole sensors. This method may allow for the removal of common mode noise. A post processing method of array compensation may have multiple identical sensor arrays 24 (Referring to Figure 1) for detecting tubing 12 and/or casing 14 simultaneously. The array compensation method may further comprise joint inversion for pipe integrity, which may help increase signal to noise ration. A post processing method utilizing space harmonic analysis, illustrated in Figure 6, may analyze each azimuthal sensor result by processing results with Fourier transforms and analyzing frequency signals. Figure 6 illustrates the results of a method of space harmonic analysis for Figures 5a - 5c. For example, that lack of a high frequency spike may convey that tubing 12 may be centered in casing 14, as illustrated in Figure 5a. A spike at 0.4 at one cycle may indicated that tubing 12 may be decentralized in casing 14, as illustrated in Figure 5c. A spike at 0.8 at two cycles may indicated that casing 14 may be elliptical, as illustrated in Figure 5b. Thus, post processing utilizing harmonic analysis may be beneficial for determining the properties of tubing 12 and/or casing 14 and how tubing 12 and/or casing 14 may relate to each other.

Although the present invention and its advantages have been described in detail, it should be understood that various changes, substitutions and alterations may be made herein without departing from the spirit and scope of the invention as defined by the appended claims.

## Claims

1. A tube inspection system, comprising:
a telemetry module, wherein the telemetry module comprises an accelerometer;
a centralizing module, wherein the centralizing module comprises at least three arms;
an inspection device, wherein the inspection device comprises a memory module, a differential amplifier, and a sensor array, wherein the sensor array comprises a transmitter, a core, and a plurality of receivers; and
a service device.

2. The system of claim 1, wherein the plurality of receivers are disposed on the core to record in three hundred and sixty degrees.

3. The system of claim 1, wherein the plurality of receivers are disposed on the inspection device.

4. The system of claim 1, wherein the transmitter is a coil or a rare earth magnet.

5. The system of claim 1, wherein the core is disposed between a first transmitter and a second transmitter.

6. A method for inspecting a tube, comprising:
(A) inserting an inspection device into a tube, wherein the inspection device comprises a sensor array and a memory unit;
(B) energizing the sensor array, wherein an electro-magnetic field is emitted from the sensor array;
(C) inducing a magnetic field within the tubing; and
(D) measuring voltage with a receiver of the sensor array.

7. The method of claim 6, wherein the energizing the sensor array comprises emitting a low frequency by a transmitter through a zone of interest.

8. The method of claim 6, wherein the measuring voltage comprises a plurality of receivers.

9. The method of claim 8, wherein the plurality of receivers are disposed on a core.

10. The method of claim 8, wherein the plurality of receivers are disposed azimuthally on the sensor array.

11. The method of claim 6, wherein the sensor array is self-repeating.

12. The method of claim 11, wherein the transmitter is energized in anti-direction/180 degree phase difference.

13. The method of claim 12, further comprising a space harmonic analysis of the measuring voltage with the receiver of the sensor array.

14. The method of claim 12, further comprising an array compensation of the measuring voltage with the receiver of the sensor array.

15. The system of claim 12, further comprising a channel differentiating of the measuring voltage with the receiver of the sensor array.
